# EUROPÄISCHE PATENTSCHRIFT

(11) **EP 2 338 732 B1**
(45) Veröffentlichungstag und Bekanntmachung des Hinweises auf die Patenterteilung: **17.08.2016**
(21) Anmeldenummer: 10193433.9
(22) Anmeldetag: 02.12.2010
(51) Int. Cl.: B60Q 1/26, B60Q 1/00, G02B 6/00, F21S 8/10, F21V 8/00

(54) **Kraftfahrzeugbeleuchtungseinrichtung mit einem Lichtleiter und verschiedenfarbigen Lichtquellen**
Motor vehicle lighting device with a light guide and light sources of different colours
Dispositif d'éclairage de véhicule automobile doté d'un guide de lumière et de sources lumineuses de différentes couleurs

(30) Priorität: 16.12.2009 DE 102009058457
(43) Veröffentlichungstag der Anmeldung: 29.06.2011
(73) Patentinhaber: Automotive Lighting Reutlingen GmbH, 72762 Reutlingen (DE)
(72) Erfinder: Gebauer, Matthias, 72770 Reutlingen (DE)
(74) Vertreter: DREISS Patentanwälte PartG mbB

(56) Entgegenhaltungen:
- EP-A1- 2 101 202
- EP-A1- 2 270 389
- EP-A2- 2 071 228
- WO-A1-2009/110476
- DE-A1-102006 037 797
- GB-A- 1 584 690
- GB-A- 2 321 976
- GB-A- 2 451 125
- JP-A- 2006 236 588
- US-A1- 2010 202 153

## Beschreibung

Die vorliegende Erfindung betrifft eine Kraftfahrzeugbeleuchtungseinrichtung nach dem Oberbegriff des Anspruchs 1.

Eine solche Kraftfahrzeugbeleuchtungseinrichtung ist aus der

JP 2006 23 6588 bekannt.

Diese Schrift zeigt eine Kombination eines Scheinwerfers mit weiteren Lichtfunktionen. Die weiteren Lichtfunktionen werden mit einer Anordnung aus einem Lichtleiter und LEDs erzeugt. Der Lichtleiter weist eine Lichtabstrahlfläche auf, auf der Licht auskoppelnde und Licht richtende Strukturen (Prismen) angeordnet sind.

Eine weitere Kraftfahrzeugbeleuchtungseinrichtung ist aus der DE 10 2005 019 018 bekannt. Die weitere Kraftfahrzeugbeleuchtungseinrichtung besitzt einen Lichtleiter und wenigstens eine erste Lichtquelle, die Licht einer ersten Farbe erzeugt und in den Lichtleiter einspeist, sowie eine zweite Lichtquelle, die Licht einer zweiten Farbe erzeugt und in den Lichtleiter einspeist, wobei der Lichtleiter Lichtauskoppelelemente und eine Lichtabstrahlfläche aufweist.

Die weitere Kraftfahrzeugbeleuchtungseinrichtung ist in einen Außenspiegel des Kraftfahrzeugs integriert. Der Lichtleiter weist eine langgestreckte Form auf. Das der Fahrzeuglängsseite nähere, proximale Ende des Lichtleiters steht annähernd rechtwinklig von der Fahrzeuglängsseite ab. Im weiteren Verlauf geht der Lichtleiter in einem gekrümmten Verlauf in einen Abschnitt über, der näherungsweise parallel zu der Fahrzeuglängsseite ausgerichtet ist, so dass das distale Ende des Lichtleiters in die zur Fahrtrichtung entgegengesetzte Richtung zeigt.

Am proximalen Ende des Lichtleiters ist eine erste Lichtquelle angeordnet, die Licht einer ersten Farbe erzeugt und über eine erste Lichteintrittsfläche in den Lichtleiter einspeist. Am distalen Ende ist eine zweite Lichtquelle angeordnet, die Licht einer zweiten Farbe erzeugt und über eine zweite Lichteintrittsfläche in den Lichtleiter einspeist.

Im Bereich der Krümmung weist der Lichtleiter Lichtauskopplungselemente in Form von ersten und zweiten Lichtaustrittsflächen auf, die in eine Lichtabstrahlfläche integriert sind und die sich in ihrer Ausrichtung unterscheiden. Die ersten Lichtaustrittsflächen sind etwa parallel zu der ersten Lichteintrittsfläche und damit gleichzeitig in etwa orthogonal zu der zweiten Lichteintrittsfläche angeordnet. Entsprechend sind die zweiten Lichtaustrittsflächen etwa parallel zu der zweiten Lichteintrittsfläche und damit gleichzeitig in etwa orthogonal zu der zweiten Lichteintrittsfläche angeordnet.

Aufgrund dieser Anordnung schließt eine erste Richtung, in die das Licht der ersten Farbe ausgekoppelt wird, und eine zweite Richtung, in die das Licht der zweiten Farbe aus dem Lichtleiter ausgekoppelt wird, etwa einen rechten Winkel ein. Dabei wird das Licht der zweiten Lichtquelle in Fahrtrichtung abgestrahlt, und das Licht der ersten Lichtquelle wird zur Seite abgestrahlt. Für eine Blinkleuchtenfunktion wird gelb oder orange als erste Farbe verwendet. Für eine Begrenzungslicht- oder Tagfahrlichtfunktion wird weiß als zweite Farbe verwendet.

Die bekannte Kraftfahrzeugbeleuchtungseinrichtung soll die Lichtfunktionen Tagfahrlicht, seitliches Blinklicht und Seitenmarkierungslicht erfüllen. Als Zusatznutzen wird herausgestellt, dass die bekannte Beleuchtungseinrichtung beim gleichzeitigen Betreiben der ersten und der zweiten Lichtquelle aber auch zur Erkennung einer Markenidentität dienen kann. Dies soll sich dadurch ergeben, dass die Farbe, unter der die Leuchte erscheint, vom Betrachtungswinkel eines außenstehenden Betrachters abhängt, so dass sich beim Vorbeifahren ein Farbwechsel vollzieht. Dies setzt einen gleichzeitigen Betrieb der ersten und der zweiten Lichtquelle voraus.

Aus der nur zur Seite erfolgenden Auskopplung des Blinklichtes ergibt sich, dass die Blinkleuchtenfunktion nur zur Seite, aber nicht nach vorn oder nach hinten in Erscheinung tritt. Soweit das Blinklicht doch nach vorn oder hinten gerichtete Anteile aufweist, werde diese durch das Tagfahrlicht überstrahlt.

Die bekannte Leuchte ist daher ergänzend als seitliches Blinklicht, aber nicht als gleichzeitig in einen größeren Winkelbereich abstrahlende, vollwertige Blinkleuchte verwendbar.

Dies steht zum Beispiel einer Verwendung als vollwertiges Blinkleuchtenmodul in einem Scheinwerfer oder einer Rückleuchte entgegen.

Vor diesem Hintergrund besteht die Aufgabe der Erfindung in der Angabe einer Kraftfahrzeugbeleuchtungseinrichtung, mit der die Anforderungen an die Lichtverteilung mehrerer Lichtfunktionen mit derselben Lichtleiterstruktur erfüllbar sind, so das die Kraftfahrzeugbeleuchtungseinrichtung in Bezug auf diese Lichtfunktionen als vollwertige Komponente verwendbar ist, sei es als separate Beleuchtungseinrichtung mit einem eigenen Gehäuse oder als Scheinwerfer oder Rückleuchte, die neben der genannten Lichtleiterstruktur noch weitere, andere Lichtfunktionen wie Abblendlicht, Fernlicht, Nebellicht, Rückfahrlicht, Bremslicht, usw. bereitstellende Lichtmodule aufweist, und die ein Verbessertes Erscheinungsbild besitzt.

Diese Aufgabe wird mit einer Kraftfahrzeugbeleuchtungseinrichtung der eingangs genannten Art gelöst, die zusätzlich die kennzeichnenden Merkmale des Anspruchs 1 aufweist.

Demnach ist der Lichtleiter dazu eingerichtet, das Licht der ersten Farbe und das Licht der zweiten Farbe in die gleiche Richtung abzustrahlen.

Die Erfindung hat den Vorteil, dass die Abstrahlung des Lichtes der ersten Farbe und der zweiten Farbe nicht den Richtungsbeschränkungen der bekannten Kraftfahrzeugleuchte unterliegt. Damit kann die erfindungsgemäße Kraftfahrzeugbeleuchtungseinrichtung insbesondere so ausgelegt werden, dass sie unter Verwendung derselben Lichtleiterstruktur die gesetzlichen Anforderungen an die Lichtverteilungen verschiedener Lichtfunktionen erfüllt.

Dies gilt insbesondere für die Kombination der Lichtfunktionen des Tagfahrlichtes und des Blinklichtes sowie die Kombination der Lichtfunktionen eines Begrenzungslichtes und eines Blinklichtes. Diese Kombinationen haben gemeinsam, dass die Anforderungen an die Geometrie ihrer Lichtverteilung hinreichend ähnlich sind, um mit derselben Lichtleiterstruktur erfüllt zu werden. Unterschiede in den geforderten Beleuchtungsstärken lassen sich durch eine Dimmung, beziehungsweise durch eine entsprechende Ansteuerung und/oder Auslegung der Lichtleistung der beteiligten Lichtquellen erzielen. Dadurch ist es zum Beispiel auch möglich, die Kombination eines Blinklichtes, eines Tagfahrlichtes und eines als Begrenzungslicht dienenden gedimmten Tagfahrlichtes platzsparend mit derselben Lichtleiterstruktur bereitzustellen.

Eine Überstrahlung des Blinklichtes durch eine möglicherweise hellere, durch denselben Lichtleiter realisierte Tagfahrlichtfunktion und/oder das Entstehen einer unerwünschten Mischfarbe kann leicht dadurch vermieden werden, dass die ersten und die zweiten Lichtquellen nur alternativ zueinander eingeschaltet werden. Wesentlich ist jedoch, dass zwei oder mehr Lichtfunktionen durch die gleiche Lichtleiterstruktur realisiert werden. Bei Scheinwerfern und/oder Rückleuchten, bei denen diese Begrenzungslichtfunktionen und Blinklichtfunktionen und/oder Bremslichtfunktionen und/oder Schlusslichtfunktionen in einer baulichen Einheit, eben dem Scheinwerfer oder der Rückleuchte, realisiert werden sollen, erspart die erfindungsgemäße Mehrfachnutzung derselben Lichtleiterstruktur für die Realisierung verschiedener Lichtfunktionen Bauraum, Gewicht und Kosten, die sonst für Lichtfunktions-individuelle Strukturen aufgewandt werden müssten.

Im Ergebnis steht in dem Lichtleiterabschnitt, der zwischen den beiden Zweigen liegt, nur Licht einer Farbe zur Auskopplung zur Verfügung. Die Erfindung erlaubt daher eine visuelle Gewichtung der Lichtfunktionen über die jeweils zugeordnete leuchtende Fläche der Abschnitte. Die leuchtende Fläche ist nämlich bei eingeschalteter zweiter Lichtquelle größer als bei eingeschalteter erster Lichtquelle. Bei einer Realisierung der Blinklichtfunktion durch die zweite Lichtquelle wird durch die größere Leuchtfläche bei aktivierter zweiter Lichtquelle ein besonderer Signaleffekt erzielt, der über einen bloßen Farbwechsel der leuchtenden Fläche hinausgeht.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine Kraftfahrzeugbeleuchtungseinrichtung mit einer von zwei Seiten her erfolgenden Lichteinspeisung in einen Lichtleiter;
- Fig. 2: ein Beispiel einer von einer Seite her erfolgenden Lichteinspeisung in einen Lichtleiter;
- Fig. 3: ein zweites Beispiel einer von einer Seite her erfolgenden Lichteinspeisung in einen Lichtleiter;
- Fig. 4: ein Ausführungsbeispiel der Erfindung mit einer von einer Seite her erfolgenden Lichteinspeisung in einen Lichtleiter;
- Fig. 5: einen Querschnitt durch einen Lichtleiter gemäß einer bevorzugten Ausgestaltung; und
- Fig. 6: eine in Lichtaustrittsrichtung mit Blickrichtung von hinten betrachtete Ansicht einer bevorzugten Ausgestaltung eines Lichtleiters.

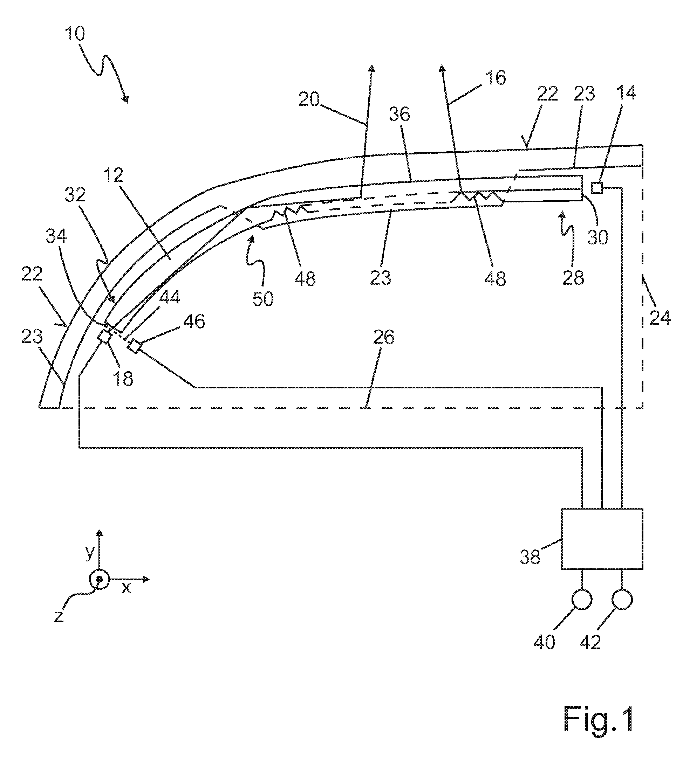

Im Einzelnen zeigt die Fig. 1 eine Kraftfahrzeugbeleuchtungseinrichtung 10 mit einem Lichtleiter 12 und wenigstens einer ersten Lichtquelle 14, die Licht 16 einer ersten Farbe erzeugt, sowie mit wenigstens einer zweiten Lichtquelle 18, die Licht 20 einer zweiten Farbe erzeugt. Die Lichtquellen 14, 18 speisen also Licht 16, 20 verschiedener Farben in den Lichtleiter 12 ein, wobei hier auch weißes Licht als Licht einer bestimmten Farbe verstanden wird.

Der Lichtleiter 12 befindet sich hinter einer farblosen und transparenten Abdeckscheibe 22, die einen Teil des Gehäuses der Kraftfahrzeugbeleuchtungseinrichtung 10 bildet. Die gestrichelten Linien 24, 26 begrenzen den für die Erfindung wesentlichen Teil der Kraftfahrzeugbeleuchtungseinrichtung 10. Diese Linien 24, 26 repräsentieren in einer Ausgestaltung ein Gehäuse der Kraftfahrfahrzeugbeleuchtungseinrichtung 10. In diesem Fall dient die Kraftfahrzeugbeleuchtungseinrichtung 10 als separates Bauteil, das nur die mit dem Lichtleiter 12 realisierbaren Lichtfunktionen bereitstellt. In einer anderen Ausgestaltung repräsentieren diese Linien 24, 26 eine Abgrenzung zu weiteren Lichtmodulen, die in einer Kraftfahrzeugbeleuchtungseinrichtung angeordnet sind. Solche weiteren Lichtmodule dienen bei einem Frontscheinwerfer als Kraftfahrzeugbeleuchtungseinrichtung 10 zum Beispiel zur Erzeugung einer Hauptlichtfunktion wie einer Abblendlichtfunktion und/oder einer Fernlichtfunktion. Bei einer Heckleuchte als Kraftfahrzeugbeleuchtungseinrichtung 10 dienen solche weiteren Lichtmodule zur Erzeugung weiterer Lichtfunktionen wie Rückfahrlicht, Bremslicht, Nebelschlusslicht, usw.

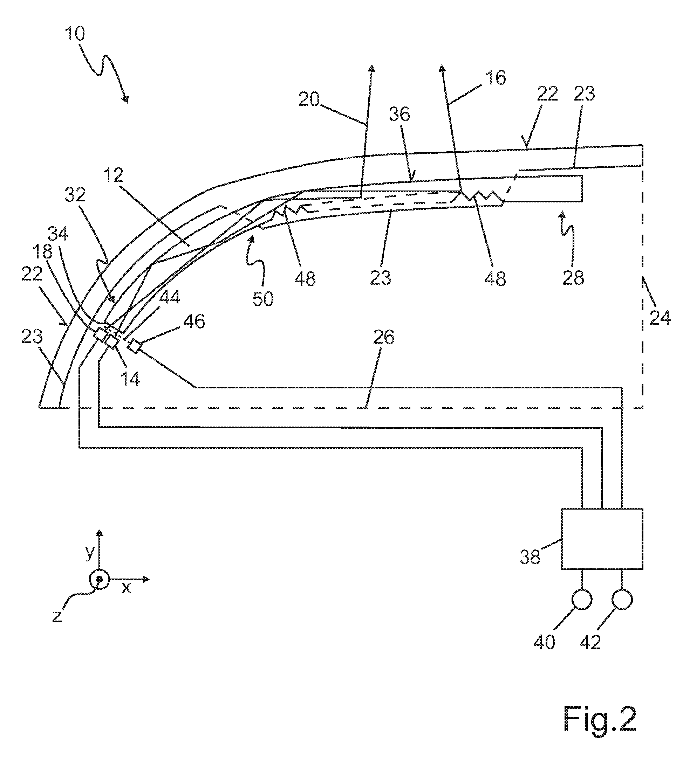

Dies gilt im Übrigen auch für die Gegenstände der Figuren 2 bis 4. Beim Einbau als Frontscheinwerfer in einem Fahrzeug entspricht die x-Richtung der Richtung einer Fahrzeugquerachse, die y-Richtung der Richtung einer Fahrzeuglängsachse und die z-Richtung der Richtung einer Fahrzeughochachse.
Der durch die Abdeckscheibe 22 einsehbare Bereich des Scheinwerferinnenraums wird durch einen nichttransparenten Abdeckrahmen 23 begrenzt, welcher Öffnungen aufweist, durch die das Licht der Lichtfunktionen hindurchtreten kann oder an denen optische Komponenten angeordnet oder durchgeführt werden.

Der Lichtleiter 12 weist ein erstes Ende 28 mit einer ersten Stirnseite 30 und ein zweites Ende 32 mit einer zweiten Stirnseite 34 auf. An dem ersten Ende 28 ist die erste Lichtquelle 14 so angeordnet, dass sie Licht 16 der ersten Farbe über die erste Stirnseite 30 in den Lichtleiter 12 einspeist. An dem zweiten Ende 32 ist die zweite Lichtquelle 18 so angeordnet, dass sie Licht 20 der zweiten Farbe über die zweite Stirnseite 34 in den Lichtleiter 12 einspeist. Die Lichtquellen (14, 18) liegen jeweils hinter einem Abdeckrahmen 23 der Beleuchtungseinrichtung 10. Die Enden 28, 32 des Lichtleiters 12 verlaufen zumindest teilweise hinter dem Abdeckrahmen 23.

Es versteht sich, dass die Einspeisung jeweils über eine zwischen der Lichtquelle 14, 18 und dem Lichtleiter 12 angeordnete, die Konvergenz des Lichtes vergrößernde Primäroptik erfolgen kann. Bereits eine einfache Sammellinse kann als Beispiel einer solchen Primäroptik dienen. Bevorzugt werden sammelnde Vorsatzoptiken für LED, die interne Totalreflexion nutzen. Alternativ oder ergänzend kann das jeweilige Ende 28, 32 des Lichtleiters 12 eine die Konvergenz steigernde oder eine den Lichteinfangquerschnitt des Lichtleiters 12 vergrößernde Geometrie besitzen. Die Enden 28, 32 des Lichtleiters 12 werden an einer Seite durch die Stirnseiten 30, 34 begrenzt, an denen das Licht in den Lichtleiter eingekoppelt wird. An der anderen Seite werden sie jeweils durch den zwischen ihnen liegendenAbschnitt des Lichtleiters begrenzt, in dem sich die Auskoppelelemente befinden. Die Enden 28, 32 des Lichtleiters leiten das Licht der Lichtquellen zum Auskoppelbereich. Die Enden 28, 32 besitzen bevorzugt eine glatte Oberfläche, damit in diesem Abschnitt des Lichtleiters möglichst wenig Licht gestreut wird. Gleichzeitig wird durch die Lichtpropagation in den Enden 28, 32 einen Homogenisierung der Ausleuchtung des Lichtleiters durch mehrfache interne Totalreflexion des Lichts erreicht. Dies gilt für sämtliche der in dieser Anmeldung vorgestellten Ausgestaltungen.

Die Einspeisung des Lichtes 16 der ersten Farbe und des Lichtes 20 der zweiten Farbe in den Lichtleiter 12 erfolgt in dieser Ausgestaltung in entgegengesetzten Richtungen, wobei insbesondere das Licht 16 der ersten Farbe nur über die erste Stirnseite 28 und das Licht 20 der zweiten Farbe nur über die zweite Stirnseite 34 in den Lichtleiter 12 eingespeist wird.

Durch diese Ausgestaltung kann gezielt ein Helligkeitsgradient in der bei eingeschalteter Lichtquelle 14 oder 18 für einen Betrachter leuchtend erscheinenden Lichtabstrahlfläche 36 des Lichtleiters 12 sowie eine gezielte Anisotropie der resultierenden Lichtverteilung erzeugt werden. Dies ergibt sich daraus, dass bei einer gleichmäßigen Verteilung von weiter unten erläuterten Lichtauskoppelelementen über die Länge des Lichtleiters 12 mit zunehmendem Abstand vom Einspeiseort weniger Licht für die Auskopplung zur Verfügung steht.

In einer alternativen Ausgestaltung wird über beide Stirnseiten 30, 34 sowohl Licht 16 der ersten Farbe als auch Licht 20 der zweiten Farbe eingekoppelt. Dies wird zum Beispiel dadurch erreicht, dass an jeder der beiden Stirnseiten 30, 34 wenigstens eine erste Lichtquelle 14 und wenigstens eine zweite Lichtquelle 18 so angeordnet ist, dass die dann wenigstens zwei ersten Lichtquellen 14 jeweils Licht 16 der ersten Farbe über beide Stirnseiten 30, 34 in den Lichtleiter 12 einspeisen und die dann ebenfalls wenigstens zwei zweiten Lichtquellen 18 jeweils Licht 20 der zweiten Farbe über beide Stirnseiten 30, 34 in den Lichtleiter 12 einspeisen.

Bei dieser Ausgestaltung erfolgt die Einspeisung des Lichtes 16, 20 der beiden Farben sowohl in entgegengesetzter als auch in gleicher Richtung. Dadurch wird eine sehr gleichmäßige Verteilung der im Lichtleiter 12 propagierenden Lichtenergie erzielt, was im Folgenden eine gleichmäßige Verteilung der ausgekoppelten Lichtenergie über der Länge des Lichtleiters 12 begünstigt. Damit wird eine sehr gleichmäßige Helligkeit der für den Betrachter bei eingeschalteten Lichtquellen 14 oder 18 leuchtend erscheinenden Lichtabstrahlfläche 36 erzielt.

In einer bevorzugten Ausgestaltung ist die erste Lichtfarbe 16 eine für ein Begrenzungslicht und für ein Tagfahrlicht zulässige Lichtfarbe wie weiß, während die zweite Lichtfarbe 20 eine für ein Blinklicht zulässige Lichtfarbe wie gelb oder orange ist. Mit dieser Ausgestaltung lässt sich eine Mehrfachnutzung des Lichtleiters 12 der Kraftfahrzeugbeleuchtungseinrichtung 10 für die Lichtfunktionen der Fahrtrichtungsanzeige und des Tagfahrlichtes erzielen. Mit einer zusätzlichen Möglichkeit der Dimmung der für das Tagfahrlicht verwendeten Lichtquellen 14 kann diese Doppelnutzung noch auf eine Dreifachnutzung erweitert werden, bei der das gedimmte Tagfahrlicht als Begrenzungslicht dient.

Die Lichtquellen 14, 18 sind bevorzugt Halbleiterlichtquellen, insbesondere LEDs, die von einer Ansteuer- und Leistungselektronik in Form eines Steuergeräts 38 angesteuert werden. Das Steuergerät 38 kann ein Bestandteil der Kraftfahrzeugbeleuchtungseinrichtung 10 sein oder als separate Komponente außerhalb der Kraftfahrzeugbeleuchtungseinrichtung 10 im Kraftfahrzeug angeordnet sein und weist Schnittstellen 40, 42 auf, über die ein Einschalten und/oder Ausschalten und/oder Dimmen der Lichtquellen 14, 18 vom Fahrer oder von anderen Steuergeräten angefordert werden kann.

Die Lichtquellen sind bevorzugt als LED-Module ausgebildet, die eine oder mehrere LED tragen. Auf einem Modul, das mehrere LED trägt können die LED die gleiche Farbe oder unterschiedliche Farben besitzen. Insbesondere können die Einzellichtquellen in Reihen mit entsprechenden Farben angeordnet werden, wobei in einer Reihe LED mit einer Farbe angeordnet sind. Alternativ können die LED bei zwei Farben in einem Schachbrettmuster angeordnet werden. Die LED sind auf einem Schaltungsträger montiert, auf dem neben den LED auch weitere elektronische Bauteile angeordnet sein können. Die Schaltungsträger sind je nach Montagegeometrie flexibel oder starr ausgebildet. Der Schaltungsträger kann eine oder mehrere Vorrichtungen zur Durchführung der Wärme der LED an einen auf der Rückseite des Schaltungsträgers angeordneten Kühlkörper enthalten. Alternativ kann ein Schaltungsträger mit integriertem Kühlkörper, beispielsweise in Form einer Metallkernplatine, verwendet werden. Ferner kann das Modul eine oder mehrere optische Komponenten enthalten, die das Licht zur Einkopplung in den Lichtleiter bündeln. Mit geeigneten Mitteln werden die beschriebenen Komponenten zu einem Modul verbunden.

Die Anordnung der Lichtquellen erfolgt auf der der Abdeckscheibe 22 abgewandten Seite des Abdeckrahmens 23. Die Enden 28,32 des Lichtleiters sind zumindest teilweise von dem Abdeckrahmen 23 bedeckt.

Halbleiterlichtquellen benötigen nur extrem kurze Zeiten zur Umsteuerung der abgestrahlten Lichtleistung zwischen maximalen und minimalen Werten. Beim Betrieb des Tagfahrlichtes ist dieses jeweils für einen einzelnen Blinklichtimpuls zu unterbrechen. Als Folge der Verwendung von Halbleiterlichtquellen wird dies von dem vergleichsweise langsam reagierenden menschlichen Auge lediglich als schneller Farbwechsel wahrgenommen, der nicht mit störenden Helligkeitsschwankungen einhergeht.

In einer bevorzugten Ausgestaltung sind die ersten Halbleiterlichtquellen dazu eingerichtet, Licht 16 der ersten Farbe zu emittieren, und die zweiten Halbleiterlichtquellen sind dazu eingerichtet, Licht 20 der zweiten Farbe zu emittieren. Diese Ausgestaltung hat den Vorteil besonders einfach zu sein und nur wenige Komponenten für die Erzeugung der unterschiedlichen Farben zu benötigen.

In einer alternativen Ausgestaltung weisen sowohl die ersten Lichtquellen 14 als auch die zweiten Lichtquellen 18 Halbleiterlichtquellen auf, die weißes Licht emittieren. Dabei weisen die zweiten Lichtquellen 18 ein zusätzliches Farbfilter 44 auf, das nur für Licht der zweiten Lichtfarbe durchlässig ist. Diese Ausgestaltung ist deshalb von Vorteil, weil die weißes Licht emittierenden Halbleiterlichtquellen in Bezug auf die Temperaturabhängigkeit ihrer Lichtfarbe weniger starken Schwankungen unterworfen sind als zum Beispiel gelbes Licht emittierende LEDs.

In einer weiteren Ausgestaltung ist das Farbfilter 44 beweglich und dazu eingerichtet, zum Erzeugen der zweiten Lichtfarbe in einen Lichtweg zwischen wenigstens eine der Halbleiterlichtquellen und den Lichtleiter 12 bewegt zu werden. Zur Realisierung einer solchen Ausgestaltung weist die Kraftfahrzeugbeleuchtungseinrichtung 10 der Fig. 1 ein Stellglied 46 auf, das die Bewegung des Farbfilters 44 realisiert und das seinerseits vom Steuergerät 38 angesteuert wird.

Die Ausgestaltung mit dem beweglichen Farbfilter 44 hat den Vorteil, dass zumindest ein Teil der LEDS mehrfach genutzt wird, nämlich sowohl für die Erzeugung des Tagfahrlichtes als auch für die Erzeugung des Blinklichtes. Für die Dauer des Blinklichtimpulses wird dann jeweils das Farbfilter 44 in den Lichtweg zwischen den mehrfach nutzbaren Halbleiterlichtquellen und dem Lichtleiter 12 bewegt. Dadurch können die gesetzlichen Anforderungen an die Intensität der Blinklichtverteilung und der Tagfahrlichtverteilung mit einer vergleichsweise geringen Anzahl von Halbleiterlichtquellen erfüllt werden. Fig. 1 zeigt eine Ausgestaltung mit einem Farbfilter 44 an einer Stirnseite 34. Es versteht sich aber, dass auch beide Stirnseiten 34, 30 mit Farbfiltern 44 versehen sein können.

Der Lichtleiter 12 weist Lichtauskoppelelemente 48 und eine Lichtabstrahlfläche 36 auf. Der Lichtleiter 12 ist dazu eingerichtet, das Licht 16 der ersten Farbe und das Licht 20 der zweiten Farbe in die gleiche Richtung abzustrahlen.

Dabei wird unter einer Abstrahlung in die gleiche Richtung eine Abstrahlung verstanden, die zu einer im wesentlichen gleichen geometrischen Lichtverteilung des Lichtes 16 des ersten Farbe und des Lichtes 20 der zweiten Farbe im Außenraum vor der Kraftfahrzeugbeleuchtungseinrichtung 10 führt.

In der dargestellten Ausgestaltung erfolgt die Auskopplung des abgestrahlten Lichtes 16, 20 über Prismen als Lichtauskoppelelemente 48. Als Lichtauskoppelelemente 48 kommen allgemein sowohl Erhebungen als auch Vertiefungen in einer Grenzfläche des Lichtleiters 12 in Frage. Die Erhebungen und Vertiefungen können prinzipiell sehr vielfältig geformt sein.

Diese Vielfalt ergibt sich daraus, dass die lichtleitende Wirkung von Lichtleitern bekanntlich auf einer internen Totalreflexion an einer Grenzfläche des Lichtleiters basiert. Die Lichtauskoppelelemente 48 zeichnen sich bekanntlich durch eine Geometrie aus, bei der aufgrund veränderter Winkel, mit der im Inneren des Lichtleiters propagierendes Licht auf eine Grenzfläche trifft keine Totalreflexion an der die Lichtabstrahlfläche 36 bildenden Grenzfläche mehr stattfindet und dort stattdessen zumindest ein Teil des einfallenden Lichtes durch die Grenzfläche ausgekoppelt wird.

Es versteht sich daher, dass an Stelle der Prismen Lichtauskoppelelemente 48 anderer Geometrie verwendet werden können. So kann eine Auskopplung z.B. auch durch Lichtauskoppelelemente 48 in Form von Stufen, schiefen Ebenen oder Linsenstrukturen erfolgen, wobei der Anteil der ausgekoppelten Strahlung durch die Form, Größe, Anzahl und Anordnung der Lichtauskoppelelemente 48 einstellbar ist.

Dazu können die Lichtauskoppelelemente 48 direkt in der Lichtabstrahlfläche 36 angeordnet sein, wie es bei der eingangs erläuterten, bekannten Kraftfahrzeugbeleuchtungseinrichtung der Fall ist.

Im Rahmen von Ausgestaltungen der vorliegenden Erfindung ist jedoch bevorzugt, dass die Lichtauskoppelelemente 48 auf einer der Lichtabstrahlfläche 36 gegenüberliegenden Rückseite 50 des Lichtleiters 12 angeordnet sind.

Dies ist vorteilhaft, weil die Lichtabstrahlfläche 36 auf diese Weise glatt ausgestaltet werden kann, was das Erscheinungsbild verbessert. Damit verbunden ist der weitere Vorteil, das die Geometrie der Lichtauskoppelelemente 48 auf der Rückseite 50 weniger ästhetischen Beschränkungen unterworfen ist, was zu einer weitergehenden Optimierung der Auskopplung genutzt werden kann. Grundsätzlich wird bei der Auskopplung durch Lichtauskoppelelemente 48, die auf der der Lichtabstrahlseite 36 gegenüberliegenden Seite 50 angeordnet sind, eine Totalreflexion zur Änderung der Lichtstrahlrichtung benutzt. Dies stellt ein sehr effektives Verfahren dar mit dem sich vergleichsweise viel Licht aus dem Lichtleiter 12 auskoppeln lässt.

Der Lichtleiter 12 zeichnet sich im Übrigen in den bevorzugten Ausgestaltungen und damit auch in den Gegenständen der Figuren 1 bis 4 dadurch aus, dass seine Ausdehnung in einer zur Lichtabstrahlfläche 36 parallelen Richtung größer ist als ein Abstand der Lichtabstrahlfläche 36 zu der der Lichtabstrahlfläche 36 gegenüberliegenden Seite des Lichtleiters 12. Dies ist insbesondere bei sogenannten Stablichtleitern der Fall.

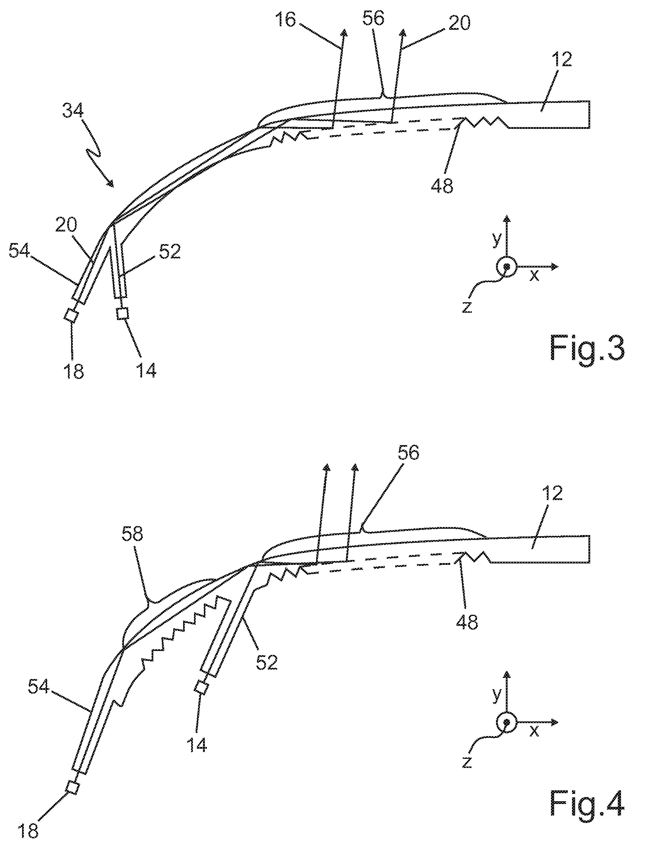

Die Figuren 2 bis 4 zeigen weitere Beispiele von Kraftfahrzeugbeleuchtungseinrichtungen, wobei die Figuren 2 und 3 nichterfindungsgemäße Beispiele zeigen und die Figur 4 ein Ausführungsbeispiel der Erfindung zeigt. Dabei beziehen sich gleiche Bezugszeichen in verschiedenen Figuren jeweils auf gleiche Elemente.

Im Einzelnen zeigt die Fig. 2 eine Ausgestaltung einer Kraftfahrzeugbeleuchtungseinrichtung, bei der die Einspeisung des Lichts 16 der ersten Farbe und die Einspeisung des Lichtes 20 der zweiten Farbe in die gleiche Richtung erfolgt. Dazu ist sowohl eine erste Lichtquelle 14 als auch eine zweite Lichtquelle 18 in räumlicher Nachbarschaft am gleichen Ende 32 des Lichtleiters 12 angeordnet, so dass Licht beider Lichtquellen über dieselbe Stirnseite 34 oder allgemeiner, über dieselbe Lichteintrittsfläche in den Lichtleiter 12 eingekoppelt wird. Die Lichteintrittsfläche kann von der Stirnseite verschieden sein.

Darüber hinaus können die beiden Lichtquellen 14, 18, die Licht verschiedener Farbe emittieren, ihr Licht auch über verschiedene Lichteintrittsflächen, aber in gleicher Richtung in den Lichtleiter 12 einspeisen. Dabei wird unter einer Einspeisung in die gleiche Richtung verstanden, dass das Licht beider Farben im Lichtleiter nach der Einspeisung in die gleiche Richtung propagiert, bevor es gegebenenfalls am anderen Ende 28 reflektiert wird.

Die Figuren 3 und 4 zeigen Ausgestaltungen, bei denen das Licht über verschiedene Lichtzweige in einen gemeinsamen Abschnitt des Lichtleiters 12 eingespeist wird. Da diese Änderungen jeweils den Lichtleiter 12 und die Art der Lichteinspeisung betreffen, ist in den Fig. 3 und 4 jeweils nur der Lichtleiter 12 zusammen mit den Lichtquellen 14 und 18 dargestellt. Diese Ausgestaltungen sind dazu gedacht, alternativ zu den Lichtleitern 12 und Lichtquellen 14, 18 aus den Figuren 1 und 2 in den Kraftfahrzeugleuchten der Figuren 1 und 2 verwendet zu werden. Die Figuren 3 und 4 repräsentieren insofern Ausgestaltungen von Kraftfahrzeugleuchten 10, wie sie im Übrigen in den Figuren 1 und 2 dargestellt und in der zugehörigen Beschreibung bereits erläutert worden sind.

Die Kraftfahrzeugbeleuchtungseinrichtung 10 der Fig. 3 zeichnet sich dadurch aus, dass der Lichtleiter 12 zumindest über einen Teil seiner Länge in wenigstens zwei Zweigen 52, 54 verläuft, wobei in einen Zweig 52 der beiden Zweige 52, 54 Licht 16 der ersten Lichtfarbe eingespeist wird und wobei in einen zweiten Zweig 54 der beiden Lichtzweige 52, 54 Licht 20 der zweiten Lichtfarbe eingespeist wird. Die Zweige 52, 54 stellen Ausgestaltungen der Enden 28, 32 dar. Sie sind entsprechend äquivalent zu den Enden 28, 32 ausgeführt.

Durch diese Aufspaltung des zur Lichteinspeisung dienenden Endes 32 des Lichtleiters 12 in zwei Zweige 52, 54 kann zunächst die Einkopplung des Lichts 16 der einen Farbe räumlich von der Einkopplung des Lichts 20 der anderen Farbe entkoppelt werden. Dies ist bei beengten Bauraum-Verhältnissen von Vorteil. Die Zweige 52, 54 können derart gestaltet werden, dass die Lichteintrittsflächen der Zweige 52, 54 in einer Weise angeordnet werden, dass die mehreren Lichtquellen 14, 18 in einer Ebene liegen, wobei mehrere Module auf einer gemeinsamen Montageeinheit angeordnet werden können.

Dabei zeigt die Fig. 3 eine Ausgestaltung, bei der die beiden Zweige in einen Lichtleiterabschnitt einmünden, der in Lichteinspeiserichtung betrachtet vor einem Lichtauskoppelelemente 48 aufweisenden Lichtleiterabschnitt 56 angeordnet ist. Dadurch ist sichergestellt, dass über die ganze Länge des Lichtauskoppelelemente 48 aufweisenden Lichtleiterabschnitts 56 sowohl Licht 16 der einen Farbe als auch Licht 20 der andern Farbe für die Auskopplung zur Verfügung steht. Daher kann der gesamte Lichtauskoppelelemente 48 aufweisende Abschnitt 56 alternativ als in der ersten Farbe leuchtende oder in der zweiten Farbe leuchtende Fläche aktiviert werden.

Die Fig. 4 zeigt ein Ausführungsbeispiel der, bei dem zwischen den beiden Zweigen 52, 54 ein Lichtauskoppelelemente 48 aufweisender Lichtleiterabschnitt 58 liegt. In diesem Lichtleiterabschnitt 58 steht daher nur Licht 20 einer Farbe zur Auskopplung zur Verfügung. Diese Ausgestaltung erlaubt daher eine visuelle Gewichtung der Lichtfunktionen über die jeweils zugeordnete leuchtende Fläche der Abschnitte 56, 58. Diese ist nämlich bei eingeschalteter zweiter Lichtquelle 18 größer als bei eingeschalteter erster Lichtquelle 16. Bei einer Realisierung der Blinklichtfunktion durch die zweite Lichtquelle 18 wird durch die größere Leuchtfläche bei aktivierter zweiter Lichtquelle 18 ein besonderer Signaleffekt erzielt, der über einen bloßen Farbwechsel der leuchtenden Fläche hinausgeht.

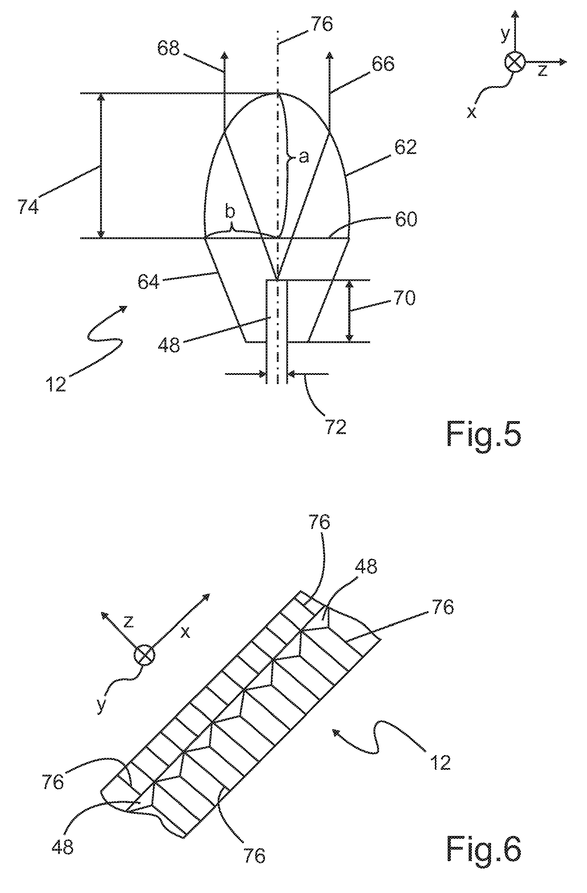

Fig. 5 zeigt einen Querschnitt durch eine Ausgestaltung eines Lichtleiters 12 in einem Bereich, in dem Prismen als lichtauskoppelnde Elemente 48 vorgesehen sind. Der Lichtleiter 12 ist entlang einer Ebene 60 in einen ersten Lichtauskoppelbereich 62 sowie einen zweiten Lichtumlenkbereich 64 unterteilt. Der Lichtauskoppelbereich 62 besitzt dabei einen halbelliptischen Querschnitt, wobei über seinen Außenumfang oder einen Teil hiervon, der als Lichtabstrahlfläche 36 dient, die Lichtabstrahlung erfolgt, wie hier durch zwei Lichtstrahlen 66 und 68 dargestellt ist. Durch die halbelliptische Form und die Wahl der Länge der Halbachsen a, b der Ellipse kann die Linsenwirkung und damit die Streucharakteristik bei der Lichtauskopplung variiert werden.

Der Lichtumlenkbereich 64 besitzt einen trapezförmigen Querschnitt. Dabei sind an der kürzeren der beiden Parallelseiten des trapezförmigen Querschnitts Lichtauskoppelelement 48 in Form von Prismen angeordnet, die zur Lichtumlenkung zur Lichtabstrahlfläche 36 hin dienen. Die Prismen können dabei bezüglich ihrer Höhe 70 sowie ihrer Breite 72 variabel ausgestaltet werden. Darüber hinaus kann der Abstand 74 der Oberkante der Lichtauskoppelelemente 48 zur Lichtabstrahlfläche 36, variabel ausgestaltet werden. Die Variation kann insbesondere über die Länge des stabförmigen Lichtleiters 12 erfolgen. Dabei können einer oder mehrere der Parameter 70, 72, 74 verändert werden.

Darüber hinaus besitzt der Lichtleiter eine Längsmittelebene 76, bezüglich der sowohl der Lichtauskoppelbereich 62 als auch der Lichtumlenkbereich 64 spiegelsymmetrisch aufgebaut sind.

Durch die vorstehend genannten Variationen über die Länge des Lichtleiters 12 lässt sich die Lichtverteilung in gewünschter Weise beeinflussen und es kann somit mit wenig Lichtstrom eine effiziente Auskopplung realisiert werden, die die Verwendung einer entsprechenden Kraftfahrzeugleuchte auch für lichtstärkere Beleuchtungsfunktionen, wie beispielsweise ein Tagfahrlicht, ermöglicht.

Nach einer besonders bevorzugten Ausführungsform ist vorgesehen, dass die Halbachse b der Halbellipse, die parallel zur Ebene 60 verläuft, kürzer als die Halbachse a ist, die parallel zur Ebene 76 verläuft. Hierdurch kann eine besonders vorteilhafte Linsenwirkung erzielt werden. Um mit möglichst großer Effizienz und großem Wirkungsgrad Licht aus einer entsprechenden Kraftfahrzeugleuchte auszukoppeln, kann dabei vorgesehen sein, dass sich der Querschnitt des Lichtleiters 12, bzw. die Form und Anordnung der Lichtauskoppelelemente 48 entlang des Lichtleiters 12, je nach Anordnung des Lichtleiters 12 und gewünschter Lichtverteilung, ändert.

Dabei kann vorgesehen sein, dass unterschiedlich lange Halbachsen der elliptischen Querschnittsfläche über die Länge des Lichtleiters 12 vorgesehen sind, da hierdurch eine unterschiedliche Fokussierung erreicht wird, so dass die Streubreite variiert werden kann. Darüber hinaus kann auch vorgesehen sein, die Prismenbreite von Lichtauskoppelelementen 48 über die Länge des Lichtleiters 12 zu variieren, wodurch ebenfalls die Streubreite der Lichtabstrahlung verändert wird. Ferner kann über eine Variation der Höhe 70 der Lichtauskoppelelement 48 die Menge an ausgekoppeltem Licht beeinflusst werden und somit die Homogenität der Lichtabstrahlung in gewünschter Weise modifiziert werden.

Schließlich kann der Abstand 74 variiert werden, da dies die Position gegenüber dem Brennpunkt der elliptisch gekrümmten Lichtabstrahlfläche 36 variiert, die eine Linsenwirkung erzeugt. Sämtliche dieser Variationen können einzeln oder auch in Kombination miteinander sowie variabel über der Länge des stabförmigen Lichtleiters verteilt erfolgen.

Abhängig von der Geometrie des Lichtleiters 12 werden die Lichtauskoppelelemente 48 bevorzugt als Prismen ausgeführt. Durch eine Variation von Prismengröße und Prismenwinkel wird eine Lichtabstrahlung erreicht, welche eine Lichtverteilung erzeugt, die für eine Lichtfunktion vorgeschrieben ist.

Die Prismen werden bevorzugt in einer oder mehreren Reihen angeordnet. Fig. 6 zeigt eine Ansicht der Seite 50 des Lichtleiters 12, die der Lichtabstrahlfläche (36) gegenüber liegt, also eine Ansicht der Rückseite einer Ausgestaltung des Lichtleiters 12.

Um bei Leuchten auch die gesetzlich vorgeschriebenen Sichtbarkeitswerte zu erreichen kann der Lichtleiter 12 auf seiner Rückseite 50 zusätzlich im Anschluss an Kanten aufweisende Auskoppelelemente 48 (zum Beispiel Prismen) mit feinen Prismenlinien 76 versehen werden, die durch Erhöhungen oder Vertiefungen im Lichtleiter entstehen. Die Erhöhungen oder Vertiefungen haben dabei bevorzugt Abmessungen, die weniger als ein Zehntel der Prismenabmessungen betragen. Indem in der Nähe jeder Prismenkante der Auskoppelelemente 48 eine Linie 76 beginnt, kann das Erscheinungsbild im ausgeschalteten Zustand vorteilhaft beeinflusst werden, weil die Auskoppelelement 48/Prismen dadurch weniger in Erscheinung treten.

## Patentansprüche

1. Kraftfahrzeugbeleuchtungseinrichtung (10) mit einem Lichtleiter (12) und wenigstens einer ersten Lichtquelle (14), die Licht (16) einer ersten Farbe erzeugt und in den Lichtleiter (12) einspeist, sowie mit wenigstens einer zweiten Lichtquelle (18), die Licht (20) einer zweiten Farbe erzeugt und in den Lichtleiter (12) einspeist, wobei der Lichtleiter (12) Lichtauskoppelelemente (48) und eine Lichtabstrahlfläche (36) aufweist und dazu eingerichtet ist, das Licht (16) der ersten Farbe und das Licht (20) der zweiten Farbe in die gleiche Richtung abzustrahlen, und wobei die Lichtquelle hinter einem Abdeckrahmen (23) der Beleuchtungseinrichtung (10) liegt und Enden (28, 32) des Lichtleiters (12) zumindest teilweise hinter dem Abdeckrahmen (23) verlaufen, **dadurch gekennzeichnet, dass** die Lichtabstrahlfläche glatt ausgestaltet ist und die Lichtauskoppelelemente (48) auf einer der glatten Lichtabstrahlfläche (36) gegenüberliegenden Seite (50) des Lichtleiters (12) angeordnet sind und dass ein zur Lichteinspeisung dienendes Ende (32) des Lichtleiters (12) in zwei Zweige (52, 54) aufgespalten ist, so dass der Lichtleiter (12) zumindest über einen Teil seiner Länge in wenigstens zwei Zweigen (52, 54) verläuft, wobei in einen Zweig (52) der beiden Zweige (52, 54) Licht (16) der ersten Lichtfarbe eingespeist wird und wobei in einen zweiten Zweig (54) der beiden Lichtzweige (52, 54) Licht (20) der zweiten Lichtfarbe eingespeist wird, wobei das Licht der ersten Lichtfarbe in die gleiche Richtung eingespeist wird wie das Licht der zweiten Lichtfarbe und wobei zwischen den beiden Zweigen (52, 54) ein Lichtauskoppelelemente (48) aufweisender Lichtleiterabschnitt (58) liegt.

2. Kraftfahrzeugbeleuchtungseinrichtung (10) nach Anspruch 1, **dadurch gekennzeichnet, dass** der Lichtleiter (12) ein erstes Ende (28) mit einer ersten Stirnseite (30) und ein zweites Ende (32) mit einer zweiten Stirnseite (34) aufweist und dass das Licht (16) der ersten Farbe nur über die erste Stirnseite (30) und das Licht (20) der zweiten Farbe nur über die zweite Stirnseite in den Lichtleiter (12) eingespeist wird.

3. Kraftfahrzeugbeleuchtungseinrichtung (10) nach einem der Ansprüche 1 bis 2, **dadurch gekennzeichnet, dass** der Lichtleiter (12) ein erstes Ende (28) mit einer ersten Stirnseite (30) und ein zweites Ende (32) mit einer zweiten Stirnseite (34) aufweist und dass über beide Stirnseiten (30, 34) sowohl Licht (16) der ersten Farbe als auch Licht (20) der zweiten Farbe eingekoppelt wird.

4. Kraftfahrzeugbeleuchtungseinrichtung (10) nach Anspruch 1 oder 2, **dadurch gekennzeichnet dass** die beiden Zweige (52, 54) in einen Lichtleiterabschnitt einmünden, der in Lichteinspeiserichtung betrachtet vor einem Lichtauskoppelelemente (48) aufweisenden Lichtleiterabschnitt (56) angeordnet ist.

5. Kraftfahrzeugbeleuchtungseinrichtung (10) nach einem der vorhergehenden Ansprüche, **dadurch gekennzeichnet, dass** die erste Lichtfarbe (16) eine für ein Begrenzungslicht und für ein Tagfahrlicht zulässige Lichtfarbe ist und dass die zweite Lichtfarbe (20) eine für ein Blinklicht zulässige Lichtfarbe ist.

6. Kraftfahrzeugbeleuchtungseinrichtung (10) nach einem der vorhergehenden Ansprüche, **dadurch gekennzeichnet, dass** die ersten Lichtquellen (14) erste Halbleiterlichtquellen sind, die Licht (16) der ersten Farbe emittieren, und dass die zweiten Lichtquellen (18) zweite Lichtquellen sind, die Licht (20) der zweiten Farbe emittieren.

7. Kraftfahrzeugbeleuchtungseinrichtung (10) nach einem der vorhergehenden Ansprüche, **dadurch gekennzeichnet, dass** sowohl die ersten Lichtquellen (16) als auch die zweiten Lichtquellen (18) erste Halbleiterlichtquellen sind, die Licht (16) der ersten Farbe emittieren, wobei die zweiten Lichtquellen (18) ein zusätzliches Farbfilter (44) aufweisen, das nur für Licht (20) der zweiten Lichtfarbe durchlässig ist.

8. Kraftfahrzeugbeleuchtungseinrichtung (10) nach Anspruch 7, **dadurch gekennzeichnet, dass** das Farbfilter (44) beweglich ist und dazu eingerichtet ist, zum Erzeugen der zweiten Lichtfarbe (20) in einen Lichtweg zwischen wenigstens eine der Halbleiterlichtquellen und den Lichtleiter (12) bewegt zu werden.

9. Kraftfahrzeugbeleuchtungseinrichtung (10) nach einem der vorhergehenden Ansprüche, **dadurch gekennzeichnet, dass** eine Ausdehnung des Lichtleiters (12) in einer zur Lichtabstrahlfläche (36) parallelen Richtung größer ist als ein Abstand der Lichtabstrahlfläche (36) zu der der Lichtabstrahlfläche (36) gegenüberliegenden Seite des Lichtleiters (12).

## Claims

1. A motor vehicle lighting device (10) having a light guide (12) and at least one first light source (14), which generates light (16) in a first color and feeds it into the light guide (12), and having at least one second light source (18), which generates light (20) in a second color and feeds into the light guide (12), the light guide (12) having light decoupling elements (48) and a light-radiating face (36) and being arranged for emitting the light (16) in the first color and the light (20) in the second color in the same direction, and the light source being located behind a cover frame (23) of the lighting device (10), and ends (28, 32) of the light guide (12) extend at least partially behind the cover frame (23), **characterized in that** the light-radiating face is embodied as smooth, and the light decoupling elements (48) are located on a side (50) of the light guide (12) opposite the smooth light-radiating face (36); and that an end (32) of the light guide (12) serving the purpose of feeding in light is split into two branches (52, 54), so that the light guide (12) extends over at least a portion of its length in at least two branches (52, 54), and light (16) in the first light color is fed into one branch (52) of the two branches (52, 54), and light (20) in the second light color is fed into a second branch (54) of the two light branches (52, 54), and the light of the first light color is fed in the same direction as the light of the second light color, and a light guide portion (58) having light decoupling elements (48) is located between two branches (52, 54).

2. The motor vehicle lighting device (10) of claim 1, **characterized in that** the light guide (12) has a first end (28) with a first end face (30) and a second end (32) with a second end face (34), and that the light (16) in the first color is fed into the light guide (12) only via the first end face (30), and the light (20) in the second color is fed into the light guide only via the second end face.

3. The motor vehicle lighting device (10) of one of claims 1 through 2, **characterized in that** the light guide (12) has a first end (28) having a first end face (30) and a second end (32) having a second end face (34), and that both light (16) in the first color and light (20) in the second color are bunched in via both end faces (30, 34).

4. The motor vehicle lighting device (10) of claim 1 or 2, **characterized in that** the two branches (52, 54) discharge into a light guide portion which is located, viewing in the light infeed direction, upstream of a light guide portion (56) having light decoupling elements (48).

5. The motor vehicle lighting device (10) of one of the foregoing claims, **characterized in that** the first light color (16) is a light color for a marker light and that is permissible for a daytime running light; and that the second light color (20) is a light color permissible for a turn signal.

6. The motor vehicle lighting device (10) of one of the foregoing claims, **characterized in that** the first light sources (14) are first semiconductor light sources, which emit light (16) in the first color; and that the second light sources (18) are second light sources that emit light (20) in the second color.

7. The motor vehicle lighting device (10) of one of the foregoing claims, **characterized in that** both the first light sources (16) and the second light sources (18) are first semiconductor light sources, which emit light (16) in the first color, and the second light sources (18) have an additional color filter (44), which is passable only to light (20) in the second light color.

8. The motor vehicle lighting device (10) of claim 7, **characterized in that** the color filter (44) is movable and is arranged for being moved into a light path between at least one of the semiconductor light sources and the light guide (12) in order to generate the second light color (20).

9. The motor vehicle lighting device (10) of one of the foregoing claims, **characterized in that** a length of the light guide (12) in a direction parallel to the light-radiating face (36) is greater than a spacing of the light-radiating face (36) from the side of the light guide (12) opposite the light-radiating face (36).

## Revendications

1. Dispositif d'éclairage de véhicule automobile (10) doté d'un guide de lumière (12) et d'au moins une première source lumineuse (14), qui génère de la lumière (16) d'une première couleur et l'alimente dans le guide de lumière (12), ainsi que d'au moins une deuxième source lumineuse (18), qui génère de la lumière (20) d'une deuxième couleur et l'alimente dans le guide de lumière (12), dans lequel le guide de lumière (12) présente des éléments de découplage de lumière (48) et une surface d'émission de lumière (36) et est configuré pour émettre la lumière (16) de la première couleur et la lumière (20) de la deuxième couleur dans la même direction, et dans lequel la source lumineuse se trouve derrière un cadre de recouvrement (23) du dispositif d'éclairage (10) et des extrémités (28, 32) du guide de lumière (12) s'étendent au moins en partie derrière le cadre de recouvrement (23), **caractérisé en ce que** la surface d'émission de lumière est réalisée lisse et les éléments de découplage de lumière (48) sont agencés sur un côté (50) du guide de lumière (12) opposé à la surface d'émission de lumière (36) lisse et **en ce qu'**une extrémité (32) du guide de lumière (12) servant à l'alimentation de la lumière est divisée en deux branches (52, 54), de sorte que le guide de lumière (12) s'étend au moins sur une partie de sa longueur en au moins deux branches (52, 54), dans lequel de la lumière (16) de la première couleur de lumière est alimentée dans une branche (52) des deux branches (52, 54) et dans lequel de la lumière (20) de la deuxième couleur de lumière est alimentée dans une deuxième branche (54) des deux branches de lumière (52, 54), dans lequel la lumière de la première couleur de lumière est alimentée dans la même direction que la lumière de la deuxième couleur de lumière et dans lequel une section de guide de lumière (58) présentant des éléments de découplage de lumière (48) se trouve entre les deux branches (52, 54).

2. Dispositif d'éclairage de véhicule automobile (10) selon la revendication 1, **caractérisé en ce que** le guide de lumière (12) présente une première extrémité (28) avec un premier côté frontal (30) et une deuxième extrémité (32) avec un deuxième côté frontal (34) et **en ce que** la lumière (16) de la première couleur est alimentée dans le guide de lumière (12) uniquement via le premier côté frontal (30) et la lumière (20) de la deuxième couleur est alimentée dans le guide de lumière (12) uniquement via le deuxième côté frontal.

3. Dispositif d'éclairage de véhicule automobile (10) selon l'une quelconque des revendications 1 à 2, **caractérisé en ce que** le guide de lumière (12) présente une première extrémité (28) avec un premier côté frontal (30) et une deuxième extrémité (32) avec un deuxième côté frontal (34) et **en ce qu'**aussi bien de la lumière (16) de la première couleur que de la lumière (20) de la deuxième couleur sont introduites via les deux côtés frontaux (30, 34).

4. Dispositif d'éclairage de véhicule automobile (10) selon la revendication 1 ou 2, **caractérisé en ce que** les deux branches (52, 54) débouchent dans une section de guide de lumière, qui vue dans la direction d'alimentation de la lumière est agencée devant une section de guide de lumière (56) présentant des éléments de découplage de lumière (48).

5. Dispositif d'éclairage de véhicule automobile (10) selon l'une quelconque des revendications précédentes, **caractérisé en ce que** la première couleur de lumière (16) est une couleur de lumière admissible pour des feux de position et pour des feux de jour et **en ce que** la deuxième couleur de lumière (20) est une couleur de lumière admissible pour des feux clignotants.

6. Dispositif d'éclairage de véhicule automobile (10) selon l'une quelconque des revendications précédentes, **caractérisé en ce que** les premières sources lumineuses (14) sont des premières sources lumineuses semi-conductrices, qui émettent de la lumière (16) de la première couleur, et **en ce que** les deuxièmes sources lumineuses (18) sont des deuxièmes sources lumineuses, qui émettent de la lumière (20) de la deuxième couleur.

7. Dispositif d'éclairage de véhicule automobile (10) selon l'une quelconque des revendications précédentes, **caractérisé en ce qu'**aussi bien les premières sources lumineuses (16) que les deuxièmes sources lumineuses (18) sont des premières sources lumineuses semi-conductrices, qui émettent de la lumière (16) de la première couleur, dans lequel les deuxièmes sources lumineuses (18) présentent un filtre de couleur (44) supplémentaire, qui est seulement perméable à la lumière (20) de la deuxième couleur de lumière.

8. Dispositif d'éclairage de véhicule automobile (10) selon la revendication 7, **caractérisé en ce que** le filtre de couleur (44) est mobile et configuré pour être déplacé dans un chemin de lumière entre au moins une des sources lumineuses semi-conductrices et le guide de lumière (12) pour générer la deuxième couleur de lumière (20).

9. Dispositif d'éclairage de véhicule automobile (10) selon l'une quelconque des revendications précédentes, **caractérisé en ce qu'**une extension du guide de lumière (12) dans une direction parallèle à la surface d'émission de lumière (36) est supérieure à une distance de la surface d'émission de lumière (36) par rapport au côté du guide de lumière (12) opposé à la surface d'émission de lumière (36).
